(19) Europäisches Patentamt
European Patent Office
Office européen des brevets

(11) Veröffentlichungsnummer: **0 390 027 B1**

(12) **EUROPÄISCHE PATENTSCHRIFT**

(45) Veröffentlichungstag der Patentschrift: **27.04.94**

(51) Int. Cl.5: **C09B 29/042**, C09B 29/36, D06P 1/18

(21) Anmeldenummer: **90105695.2**

(22) Anmeldetag: **26.03.90**

Die Akte enthält technische Angaben, die nach dem Eingang der Anmeldung eingereicht wurden und die nicht in dieser Patentschrift enthalten sind.

# (54) Azofarbstoffe, deren Diazo- und Kupplungskomponente aus der Thiazolreihe stammt.

(30) Priorität: **31.03.89 DE 3910408**

(43) Veröffentlichungstag der Anmeldung:
**03.10.90 Patentblatt 90/40**

(45) Bekanntmachung des Hinweises auf die Patenterteilung:
**27.04.94 Patentblatt 94/17**

(84) Benannte Vertragsstaaten:
**CH DE ES FR GB IT LI**

(56) Entgegenhaltungen:
**FR-A- 2 401 960**
**GB-A- 2 071 684**

(73) Patentinhaber: **BASF Aktiengesellschaft**
**Carl-Bosch-Strasse 38**
**D-67063 Ludwigshafen(DE)**

(72) Erfinder: **Lamm, Gunther, Dr.**
**Heinrich-Heine-Strasse 7**
**D-6733 Hassloch(DE)**
Erfinder: **Etzbach, Karl Heinz, Dr.**
**Carl-Bosch-Ring 55**
**D-6710 Frankenthal(DE)**
Erfinder: **Wiesenfeldt, Matthias, Dr.**
**Rosenstrasse 10**
**D-6704 Mutterstadt(DE)**
Erfinder: **Hansen, Guenter, Dr.**
**Alwin-Mittasch-Platz 8**
**D-6700 Ludwigshafen(DE)**
Erfinder: **Reichelt, Helmut, Dr.**
**Johann-Gottlieb-Fichte-Strasse 56**
**D-6730 Neustadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft neue Thiazolazofarbstoffe der Formel I

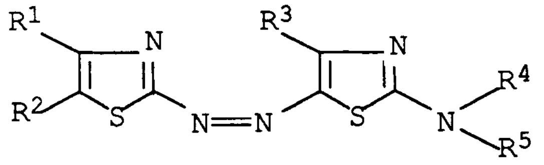

(I),

in der

$R^1$ $C_2$-$C_{12}$-Alkyl, das gegebenenfalls durch 1 bis 3 Sauerstoffatome unterbrochen ist, Phenyl, Halogen, Cyano oder $C_1$-$C_4$-Alkoxycarbonyl,

$R^2$ Formyl, Cyano, $C_1$-$C_4$-Alkoxycarbonyl oder einen Rest der Formel $-CH=CX^1X^2$, wobei $X^1$ und $X^2$ gleich oder verschieden sind und unabhängig voneinander jeweils für Cyano oder $C_1$-$C_4$-Alkoxycarbonyl stehen,

$R^3$ $C_1$-$C_{12}$-Alkyl, das gegebenenfalls durch 1 bis 4 Sauerstoffatome unterbrochen oder durch Phenyl oder Phenoxy substituiert ist, $C_5$-$C_7$-Cycloalkyl, gegebenenfalls substituiertes Phenyl, Furyl, Thienyl, $C_1$-$C_4$-Alkylthienyl oder Pyridyl und

$R^4$ und $R^5$ gleich oder verschieden sind und unabhängig voneinander jeweils $C_1$-$C_{12}$-Alkyl, das gegebenenfalls durch 1 bis 3 Sauerstoffatome unterbrochen und/oder durch Hydroxy oder Phenyl substituiert ist, bedeuten,

mit der Maßgabe, daß bei mindestens einem der Reste $R^1$, $R^4$ und $R^5$ die Alkylkette durch 1 bis 3 Sauerstoffatome unterbrochen ist, sowie ihre Verwendung zum Färben von textilen Fasern.

Aus der FR-A-2 401 960 sind ähnliche Azofarbstoffe bekannt, die sich von den erfindungsgemäßen Farbstoffen dadurch unterscheiden, daß die Alkylreste in der Aminogruppe der Kupplungskomponente nicht durch Sauerstoffatome unterbrochen sind.

Die DE-A3 108 077 beschreibt den Farbstoff 2-Diethyl-amino-4-phenyl-5-(4'-chlor-5'-formylthiazol-2'-ylazo)thiazol.

Aus der DE-A-2 910 806 sowie der JP-A-151 653/1982 sind Azofarbstoffe bekannt, die als Kupplungskomponente ein Thiazolderivat aufweisen. Aus den älteren Patentanmeldungen EP-A-335 234 sowie DE-A-3 816 698 sind außerdem Thiazolazofarbstoffe mit einer Diazokomponente aus der Isothiazolreihe bekannt.

Aufgabe der vorliegenden Erfindung war es deshalb, neue Azofarbstoffe mit einer Diazokomponente und einer Kupplungskomponente aus der Thiazolreihe bereitzustellen, die über ein vorteilhaftes anwendungstechnisches Eigenschaftsprofil verfügen.

Demgemäß wurden die oben näher bezeichneten Thiazolazofarbstoffe der Formel I gefunden.

Alle in der obengenannten Formel I auftretenden Alkylgruppen können sowohl geradkettig als auch verzweigt sein.

Wenn in der obengenannten Formel I substituierte Phenylgruppen auftreten, so können als Substituenten beispielsweise $C_1$-$C_4$-Alkyl, $C_1$-$C_4$-Alkoxy, Halogen, dabei insbesondere Chlor oder Brom, $C_1$-$C_4$-Alkanoylamino oder Nitro in Betracht kommen.

Geeignete Reste $R^1$, $R^2$, $X^1$ und $X^2$ sind beispielsweise Methoxycarbonyl, Ethoxycarbonyl, Propoxycarbonyl, Isopropoxycarbonyl, Butoxycarbonyl oder Sec-Butoxycarbonyl.

Reste $R^2$ sind weiterhin z.B. $CH=C(CN)_2$, $CH=C(CN)COOCH_3$, $CH=C(CN)COOC_2H_5$, $CH=C(COOCH_3)_2$ oder $CH=C(COOC_2H_5)_2$.

Reste $R^1$ sind weiterhin, ebenso wie die Reste $R^3$, $R^4$ und $R^5$, z.B. Methyl, Ethyl, Propyl, Isopropyl, Butyl, Isobutyl, sec-Butyl, Pentyl, Isopentyl, Neopentyl, tert-Pentyl, Hexyl, Heptyl, Octyl, 2-Ethylhexyl, Isooctyl, Nonyl, Isononyl, Decyl, Isodecyl, Undecyl oder Dodecyl. (Die obigen Bezeichnungen Isooctyl, Isononyl und Isodecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436.)

Reste $R^1$ sind weiterhin beispielsweise Chlor oder Brom.

Reste $R^3$ sind weiterhin z.B. Cyclopentyl, Cyclohexyl, Cycloheptyl, 2-, 3- oder 4-Methylcyclohexyl, 2-, 3- oder 4-Methylphenyl, 2-, 3- oder 4-Methoxyphenyl, 2-, 3- oder 4-Chlorphenyl, 2,4-Dichlorphenyl, 2-, 3- oder 4-Bromphenyl, 2-, 3- oder 4-Formylaminophenyl, 2-, 3- oder 4-Acetylaminophenyl, 2-, 3- oder 4-Nitrophenyl oder 5-Methylthien-2-yl.

Reste $R^1$, $R^3$, $R^4$ und $R^5$ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl oder 3,6,9-Trioxaundecyl.

Reste $R^3$, $R^4$ und $R^5$ sind weiterhin z.B. Benzyl oder 1- oder 2-Phenylethyl.

Reste $R^4$ und $R^5$ sind weiterhin z.B. 2-Hydroxyethyl, 2- oder 3-Hydroxypropyl oder 2- oder 4-Hydroxybutyl.

Reste $R^3$ sind weiterhin z.B. 2-Phenoxyethyl, 2- oder 3-Phenoxypropyl, 2- oder 4-Phenoxybutyl, 3,6,9,12-Tetraoxatridecyl oder 3,6,9,12-Tetraoxatetradecyl.

Bevorzugt sind Thiazolazofarbstoffe der Formel I, in der $R^4$ und $R^5$ unabhängig voneinander $C_1$-$C_6$-Alkyl, das gegebenenfalls durch 1 oder 2 Sauerstoffatome unterbrochen ist, bedeuten.

Insbesondere bevorzugt sind solche Thiazolazofarbstoffe der Formel I, in der der Rest $R^4$ vom Rest $R^5$ verschieden ist.

Die Herstellung der erfindungsgemäßen Thiazolazofarbstoffe erfolgt nach an sich bekannter weise. Beispielsweise kann man ein 2-Aminothiazol der Formel II

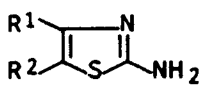

(II),

in der $R^1$ und $R^2$ jeweils die obengenannte Bedeutung besitzen, diazotieren und mit einem Thiazol der Formel III

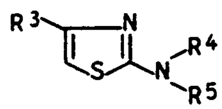

(III),

in der $R^3$, $R^4$ und $R^5$ jeweils die obengenannte Bedeutung besitzen, kuppeln.

2-Aminothiazole der Formel II sind bereits bekannt und Z.B. in der US-A-4 395 544 beschrieben oder können analog zu der dort genannten Herstellungsweise erhalten werden.

Bei den Thiazolen der Formel III handelt es sich im allgemeinen ebenfalls um bekannte Verbindungen. Sie sind z.B. in der US-A-3 770 719 oder in J.V. Metzger "Heterocyclic Compounds - Thiazole and its Derivatives", Vol. 34, Part 1, Interscience Publ., John Wiley, New York, 1979, beschrieben oder können analog zu den dort genannten Methoden erhalten werden.

Weitere Einzelheiten der Herstellung der erfindungsgemäßen Farbstoffe können den Beispielen entnommen werden.

Im allgemeinen liegen solche Thiazolazofarbstoffe der Formel I, die in den Resten $R^4$ und $R^5$ zusammen vier oder mehr Sauerstoffatome aufweisen, bei Raumtemperatur in flüssigem Aggregatzustand vor.

Die neuen Thiazolazofarbstoffe der Formel I eignen sich in vorteilhafter weise als Dispersionsfarbstoffe zum Färben von textilen Fasern, insbesondere von Celluloseestern oder Polyestern, aber auch von Polyamiden oder Mischgeweben aus Polyestern und Cellulosefasern.

Man erhält Färbungen mit guten Echtheiten, insbesondere mit guter Lichtechtheit. Die neuen Farbstoffe weisen eine gute Migration auf.

Die folgenden Beispiele sollen die Erfindung näher erläutern.

Beispiel 1

16,25 g 2-Amino-4-chlor-5-formylthiazol wurden bei 0 bis 3 °C in ein Gemisch aus 110 g Schwefelsäure (90 gew.%ig), 17 g Eisessig und 32 g 45 gew.%iger Nitrosylschwefelsäure eingestreut. Man rührte die entstehende Lösung 3,5 Stunden bei -2 bis 0 °C nach. Dann ließ man die Diazoniumsalzlösung auf eine auf 0 °C abgekühlte Lösung von 24 g der Kupplungskomponente der Formel

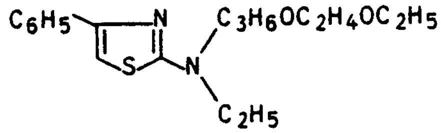

in 200 ml Eisessig, 50 ml Propionsäure und 1 g Harnstoff einlaufen. Während des Zulaufs der Diazoniumsalzlösung gab man gleichzeitig 70 g Natriumacetat hinzu und hielt die Temperatur bei <5°C. Die Kupplungsreaktion, die bereits in stark saurer Lösung abläuft, war in wenigen Minuten beendet. Der entstandene Farbstoff der Formel

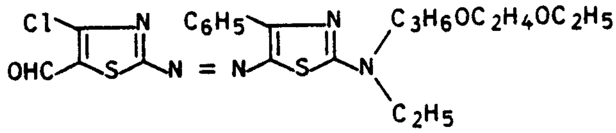

wurde abgesaugt, gewaschen und getrocknet. Man erhielt 35 g eines blauschwarzen, harzigen Farbstoffs der sich in N,N-Dimethylformamid mit rotstichig blauer Farbe löst und Polyestergewebe in klaren, rotstichig blauen bis marineblauen Tönen färbt. Das Absorptionsmaximum des Farbstoffs, gelöst in einem Gemisch aus N,N-Dimethylformamid/Eisessig (9:1 v/v) beträgt 582 nm. Die Ausfärbungen auf Polyestergewebe zeichnen sich durch sehr gute Lichtechtheit, auch schon in schwachen Ausfärbungen, aus.

Beispiel 2

16,25 g 2-Amino-4-chlor-5-formylthiazol wurden analog Beispiel 1 diazotiert und mit 24 g der Kupplungskomponente der Formel

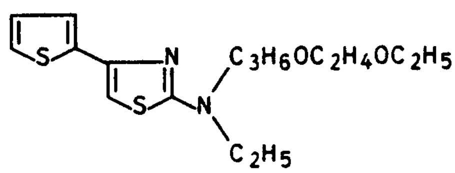

umgesetzt. Man erhielt 31 g eines blaugrünen Farbstoffs (Absorptionsmaximum 609 nm) der Polyestergewebe in vorzüglich lichtechten grünstichig blauen Tönen färbt. Der Farbstoff hat die Formel

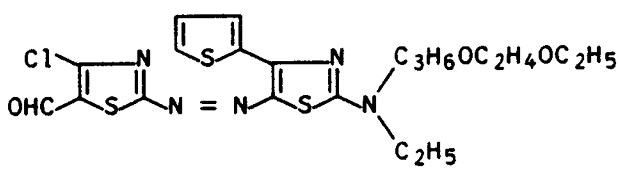

Beispiel 3

Man verfuhr analog Beispiel 1, setzte jedoch als Kupplungskomponente das Furanderivat der Formel

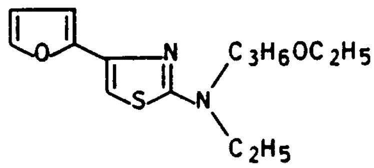

ein und erhielt den grünblauen Farbstoff der Formel

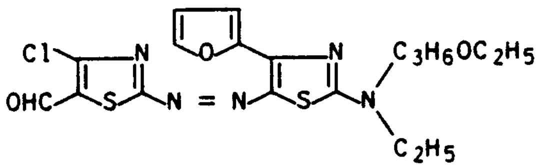

$\lambda_{max.}$: 606 nm

In analoger Weise werden die in der folgenden Tabelle aufgeführten Farbstoffe der Formel

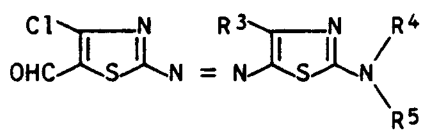

erhalten.

| Bsp.Nr. | $R^3$ | $R^4$ | $R^5$ | Farbton |
|---|---|---|---|---|
| 4 | $C_6H_5$ | $C_2H_5$ | $C_3H_6OCH_3$ | rotstichig blau |
| 5 | $C_6H_5$ | $C_2H_5$ | $C_3H_6OC_2H_5$ | rotstichig blau |
| 6 | $C_6H_5$ | $C_2H_5$ | $C_3H_6OC_2H_4OCH_3$ | rotstichig blau |
| 7 | $C_6H_5$ | $C_3H_7(n)$ | $C_3H_6OC_2H_4OCH_3$ | rotstichig blau |
| 8 | $C_6H_5$ | $C_3H_7(n)$ | $C_3H_6OC_2H_4OC_2H_5$ | rotstichig blau |
| 9 | $C_6H_5$ | $C_3H_7(n)$ | $C_3H_6OCH_3$ | rotstichig blau |
| 10 | $C_6H_5$ | $C_3H_7(i)$ | $C_3H_6OCH_3$ | rotstichig blau |
| 11 | $C_6H_5$ | $C_3H_7(i)$ | $C_3H_6OC_2H_4OCH_3$ | rotstichig blau |
| 12 | $C_6H_5$ | $C_2H_5$ | $C_2H_4OC_2H_4OC_2H_5$ | rotstichig blau |
| 13 | $C_6H_5$ | $C_2H_5$ | $C_2H_4OCH_3$ | rotstichig blau |
| 14 | $C_6H_5$ | $C_3H_6OCH_3$ | $C_3H_6OCH_3$ | rotstichig blau |
| 15 | $C_6H_5$ | $C_3H_6OCH_3$ | $C_3H_6OC_2H_5$ | rotstichig blau |
| 16 | 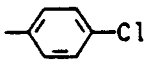 | $C_2H_5$ | $C_3H_6OCH_3$ | rotstichig blau |
| 17 | 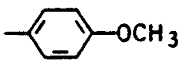 | $C_2H_5$ | $C_3H_6OC_2H_5$ | blau |
| 18 | 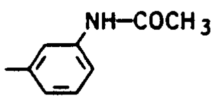 | $C_2H_5$ | $C_3H_6OC_2H_5$ | blau |
| 19 | 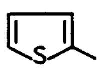 | $C_2H_5$ | $C_3H_6OC_2H_5$ | blaugrün |
| 20 | 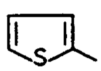 | $C_2H_5$ | $C_3H_6OCH_3$ | blaugrün |
| 21 | 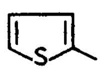 | $C_2H_5$ | $C_2H_4OC_2H_5$ | blaugrün |
| 22 | 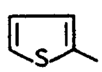 | $C_3H_7(n)$ | $C_3H_6OCH_3$ | blaugrün |

| Bsp.Nr. | $R^3$ | $R^4$ | $R^5$ | Farbton |
|---|---|---|---|---|
| 23 | 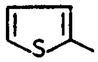 | $C_3H_7(n)$ | $C_3H_6OC_2H_4OCH_3$ | blaugrün |
| 24 | 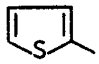 | $C_3H_7(i)$ | $C_3H_6OC_2H_4OCH_3$ | blaugrün |
| 25 | 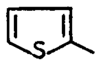 | $C_2H_5$ | $C_3H_6OC_2H_5$ | blaugrün |
| 26 | 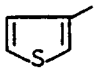 | $C_2H_5$ | $C_3H_6OCH_3$ | rotstichig blau |
| 27 | 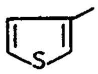 | $C_2H_5$ | $C_3H_6OC_2H_5$ | rotstichig blau |
| 28 | 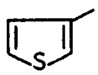 | $C_3H_7(i)$ | $C_3H_6OCH_3$ | rotstichig blau |
| 29 | 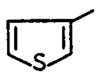 | $C_3H_7(n)$ | $C_3H_6OCH_3$ | rotstichig blau |
| 30 | 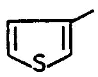 | $C_3H_7(n)$ | $C_2H_4OCH_3$ | rotstichig blau |
| 31 | 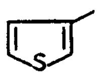 | $C_2H_5$ | $C_3H_6OC_2H_4OCH_3$ | rotstichig blau |
| 32 | 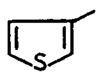 | $C_2H_5$ | $C_3H_6OC_2H_4OC_2H_5$ | rotstichig blau |
| 33 | 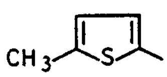 | $C_2H_5$ | $C_3H_6OC_2H_4OC_2H_5$ | blaugrün |
| 34 | 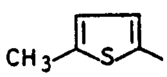 | $C_2H_5$ | $C_3H_6OC_2H_4OCH_3$ | blaugrün |
| 35 | 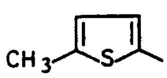 | $C_2H_5$ | $C_3H_6OC_2H_5$ | blaugrün |
| 36 | 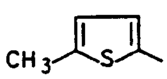 | $C_2H_5$ | $C_3H_6OCH_3$ | blaugrün |
| 37 | 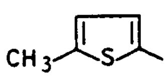 | $C_3H_7(n)$ | $C_3H_6OCH_3$ | blaugrün |
| 38 | 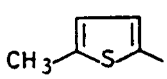 | $C_3H_6OCH_3$ | $C_3H_6OCH_3$ | blaugrün |

| Bsp.Nr. | $R^3$ | $R^4$ | $R^5$ | Farbton |
|---|---|---|---|---|
| 39 | 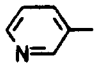 | $C_3H_6OCH_3$ | $C_2H_5$ | rotstichig blau |
| 40 | 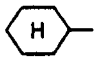 | $C_2H_4OCH_3$ | $C_2H_4OCH_3$ | bordo |
| 41 | 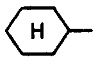 | $C_2H_5$ | $C_2H_4OCH_3$ | bordo |
| 42 | 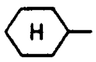 | $C_2H_5$ | $C_3H_6OCH_3$ | bordo |
| 43 | 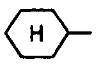 | $C_2H_5$ | $C_3H_6OC_2H_5$ | bordo |
| 44 | 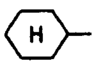 | $C_2H_5$ | $C_3H_6OC_2H_4OCH_3$ | bordo |
| 45 | 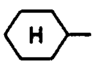 | $C_2H_5$ | $C_3H_6OC_2H_4OC_2H_5$ | bordo |
| 46 | 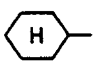 | $C_3H_7$(n) | $C_3H_6OC_2H_4OC_2H_5$ | bordo |
| 47 | 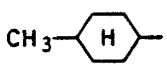 | $C_2H_5$ | $C_3H_6OCH_3$ | bordo |
| 48 | $C_6H_5OCH_2$ | $C_2H_5$ | $C_3H_6OCH_3$ | bordo |
| 49 | $C_6H_5OCH_2$ | $C_2H_5$ | $C_3H_6OC_2H_4OCH_3$ | bordo |
| 50 | $C_6H_5OCH(CH_3)$ | $C_2H_5$ | $C_3H_6OC_2H_4OCH_3$ | bordo |
| 51 | $C_6H_5CH_2$ | $C_2H_5$ | $C_3H_6OC_2H_4OCH_3$ | bordo |
| 52 | $C_6H_5CH_2$ | $C_2H_5$ | $C_3H_6OCH_3$ | bordo |
| 53 | $C_6H_5CH_2$ | $C_2H_5$ | $C_3H_6OC_2H_4OCH_3$ | bordo |
| 54 | $C_6H_5$ | $C_2H_4OCH_3$ | $CH_2CH_2C_6H_5$ | blau |

## Patentansprüche

**1.** Thiazolazofarbstoffe der Formel I

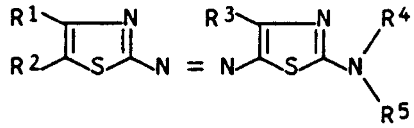

(I),

in der

$R^1$ $C_1$-$C_{12}$-Alkyl, das gegebenenfalls durch 1 bis 3 Sauerstoffatome unterbrochen ist, Phenyl, Halogen, Cyano oder $C_1$-$C_4$-Alkoxycarbonyl,

$R^2$ Formyl, Cyano, $C_1$-$C_4$-Alkoxycarbonyl oder einen Rest der Formel -CH=$CX^1X^2$, wobei

$X^1$ und $X^2$ gleich oder verschieden sind und unabhängig voneinander jeweils für Cyano oder $C_1$-$C_4$-Alkoxycarbonyl stehen,

$R^3$ $C_1$-$C_{12}$-Alkyl, das gegebenenfalls durch 1 bis 4 Sauerstoffatome unterbrochen oder durch Phenyl oder Phenoxy substituiert ist, $C_5$-$C_7$-Cycloalkyl, gegebenenfalls substituiertes Phenyl, Furyl, Thienyl, $C_1$-$C_4$-Alkylthienyl oder Pyridyl und

$R^4$ und $R^5$ gleich oder verschieden sind und unabhängig voneinander jeweils $C_1$-$C_{12}$-Alkyl, das gegebenenfalls durch 1 bis 3 Sauerstoffatome unterbrochen und/oder durch Hydroxy oder Phenyl substituiert ist, bedeuten,

mit der Maßgabe, daß bei mindestens einem der Reste $R^1$, $R^4$ und $R^5$ die Alkylkette durch 1 bis 3 Sauerstoffatome unterbrochen ist.

2. Thiazolazofarbstoffe gemäß Anspruch 1, dadurch gekennzeichnet, daß $R^4$ und $R^5$ unabhängig voneinander $C_1$-$C_6$-Alkyl, das gegebenenfalls durch 1 oder 2 Sauerstoffatome unterbrochen ist, bedeuten.

3. Verwendung der Thiazolazofarbstoffe gemäß Anspruch 1 zum Färben von textilen Fasern.

## Claims

1. Thiazole-azo dyes of the formula I

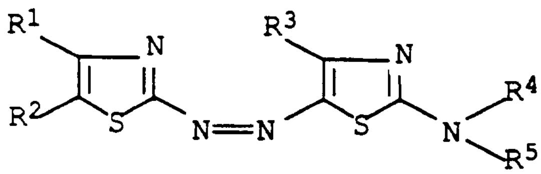

(I)

where

$R^1$ is $C_1$-$C_{12}$-alkyl, which may be interrupted by from 1 to 3 oxygen atoms, phenyl, halogen, cyano or $C_1$-$C_4$-alkoxycarbonyl,

$R^2$ is formyl, cyano, $C_1$-$C_4$-alkoxycarbonyl or a radical of the formula $-CH=CX^1X^2$, where $X^1$ and $X^2$ are identical or different and each is independently of the other cyano or $C_1$-$C_4$-alkoxycarbonyl,

$R^3$ is $C_1$-$C_{12}$-alkyl, which may be interrupted by from 1 to 4 oxygen atoms or substituted by phenyl or phenoxy, $C_5$-$C_7$-cycloalkyl, substituted or unsubstituted phenyl, furyl, thienyl, $C_1$-$C_4$-alkylthienyl or pyridyl, and

$R^4$ and $R^5$ are identical or different and each is independently of the other $C_1$-$C_{12}$-alkyl, which may be interrupted by from 1 to 3 oxygen atoms and/or substituted by hydroxyl or phenyl,

with the proviso that in at least one of $R^1$, $R^4$ and $R^5$ the alkyl chain is interrupted by from 1 to 3 oxygen atoms.

2. Thiazole-azo dyes as claimed in claim 1, wherein $R^4$ and $R^5$ are each independently of the other $C_1$-$C_6$-alkyl which may be interrupted by 1 or 2 oxygen atoms.

3. The use of the thiazole-azo dyes as claimed in claim 1 for dyeing textile fibers.

## Revendications

1. Colorants thiazolazoïques de formule I

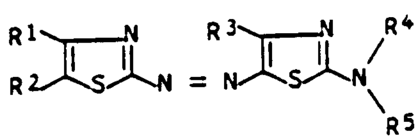

(I),

dans laquelle

$R^1$ représente un groupe alkyle en $C_1$-$C_{12}$, éventuellement interrompu par 1 a 3 atomes d'oxygène, un groupe phényle, halogéno, cyano ou (alcoxy en $C_1$-$C_4$)carbonyle,

$R^2$ représente un groupe formyle, cyano, (alcoxy en $C_1$-$C_4$)carbonyle ou un reste de formule $-CH=CX^1X^2$, $X^1$ et $X^2$ étant identiques ou différents et étant mis chacun indépendamment l'un de l'autre pour un groupe cyano ou (alcoxy en $C_1$-$C_4$)carbonyle,

$R^3$ représente un groupe alkyle en $C_1$-$C_{12}$ éventuellement interrompu par 1 à 4 atomes d'oxygène, ou substitué par un groupe phényle ou phénoxy, ou représente un groupe cycloalkyle en $C_5$-$C_7$, un groupe phényle éventuellement substitué, un groupe furyle, thiényle, (alkyle en $C_1$-$C_4$)thiényle ou pyridyle et

$R^4$ et $R^5$ sont identiques ou différents et représentent chacun indépendamment l'un de l'autre un groupe alkyle en $C_1$-$C_{12}$, éventuellement interrompu par 1 à 3 atomes d'oxygène et/ou substitué par un groupe hydroxy ou phényle,

à condition que dans au moins l'un des restes $R^1$, $R^4$ et $R^5$, la chaîne alkyle soit interrompue par 1 à 3 atomes d'oxygène.

**2.** Colorants thiazolazoïques selon la revendication 1, caractérisés en ce que $R^4$ et $R^5$ représentent indépendamment l'un de l'autre un groupe alkyle en $C_1$-$C_6$, éventuellement interrompu par 1 ou 2 atomes d'oxygène.

**3.** Utilisation des colorants thiazolazoïques selon la revendication 1 pour la teinture de fibres textiles.